# EUROPÄISCHE PATENTSCHRIFT

(11) **EP 1 962 401 B1**
(45) Veröffentlichungstag und Bekanntmachung des Hinweises auf die Patenterteilung: **21.08.2019**
(21) Anmeldenummer: 08151858.1
(22) Anmeldetag: 24.02.2008
(51) Int. Cl.: H02G 3/30, H02G 3/00

(54) **Deckenstütze**
Ceiling strut
Etai de toit

(30) Priorität: 25.02.2007 CH 3142007
(43) Veröffentlichungstag der Anmeldung: 27.08.2008
(73) Patentinhaber: Zurecon AG, 8003 Zürich (CH)
(72) Erfinder: Pfluger, Gerd, CH-4625 Oberbuchsiten (CH)
(74) Vertreter: Rutz & Partner

(56) Entgegenhaltungen:
- DE-U1- 9 116 040
- DE-U1- 9 204 000
- FR-A- 2 181 303
- GB-A- 2 268 338
- US-A- 3 749 341
- US-A1- 2006 138 286

## Beschreibung

Die Erfindung betrifft eine der Montage insbesondere von Kabelführungsvorrichtungen, Rohrleitungen und Deckenkonstruktionen dienende Deckenstütze nach dem Oberbegriff des Patentanspruchs 1.

In Gewerbe-, Industrie- und Verwaltungsgebäuden werden Kabel für Stark- und Schwachstromnetze infolge fehlender Eigenstabilität, im Gegensatz zu Rohren, in kanalartige Vorrichtungen wie Kabelbahnen, Gitterbahnen gelegt, und so beispielsweise von einem Schaltfeld zu den Verbrauchern geführt. Kabelführungsvorrichtungen dieser Art sind beispielsweise aus [1], Produktkatalog der LANZ OENSINGEN AG, April 2003, bekannt.

In [1], Seite 10 ff. sind Gitterbahnen, in [1], Seite 18 ff. sind Multibahnen und in [1], Seite 34 ff. sind Weitspann-Multibahnen gezeigt, die je nach der Art und Menge der zu verlegenden Kabel und der vorliegenden Gebäudeverhältnisse zur Anwendung kommen.

Das zur Montage an Decken dienende Trägermaterial für Kabelführungsvorrichtungen besteht normalerweise aus einer sogenannten Deckenstütze, mit der ein Ausleger (Konsole) verbindbar ist. Auf den mit der Deckenstütze verbundenen Ausleger werden die Kabelführungsvorrichtungen abgelegt, wie dies in [1] gezeigt ist.

Die aus [1] bekannte, normalerweise aus verzinktem oder rostfreiem Stahl bestehende Deckenstütze weist eine Kopfplatte auf, die mit einem meist gelochten, stab- oder rohrförmigen Profilteil verschweisst oder verschraubt ist. Diese Kopfplatte wird mittels Montageschrauben bzw. Metalldübel, auch Segmentanker genannt, mit der Decke verbunden. Die in die Ecke eingesenkten Segmentanker sind dabei in der Lage, grössere Lasten zu tragen.

Nach der Montage der Deckenstütze kann der Ausleger auf passender Höhe mit einer Seitenwand des in der Regel U- oder C-förmigen Profilteils verschraubt, oder darin eingehängt werden.

Aufgrund der schweren Lasten sind Deckenstützen dieser Art hohen Belastungen ausgesetzt, weshalb entsprechend gross dimensionierte Vorrichtungen aus verhältnismässig dickem Stahlblech eingesetzt werden. Metallene Deckenstützen der genannten Art weisen typischerweise ein hohes Gewicht auf.

Um die Deckenstützen an der Decke stabil zu montieren, werden sie jeweils mit einer oder mehreren Montageschrauben an der Decke befestigt. Zur Montage der Deckenstütze besteigt der Handwerker normalerweise eine Leiter, wonach die Deckenstütze mit einer Hand gehalten wird. Mit der anderen Hand muss der Handwerker eine Gewindemutter auf die mindestens eine Montageschraube aufsetzen und sicherheitshalber einige Umdrehungen hochschrauben, um die Deckenstütze derart provisorisch zu montieren bzw. zu fixieren. Aufgrund des relativ hohen Gewichts der zu haltenden Deckenstütze, der oft unvorteilhaften Position des Handwerkers auf der Leiter, der auf Baustellen oft schlechten Beleuchtung und der oft grossen Kälte, welche zu klammen Fingern führt, ist diese Montage mit erheblichen Problemen, insbesondere Sicherheitsproblemen, verbunden. Aufgetreten sind Handverletzungen bei der beschriebenen Manipulation mit Deckenstützen, Verletzungen durch seitliches Ausschlagen oder Herunterfallen der Deckenstütze. Normalerweise ist auch der Handwerker auf der Leiter jeweils ungesichert.

Aus der US3749341A ist eine Aufhängevorrichtung mit einem L-förmigen Bügel bekannt, der einen horizontalen Schenkel aufweist, der von einem Segmentanker gehalten wird. Dazu ist der horizontale Schenkel mit einer horizontal nach aussen geöffneten Schlitzöffnung versehen, in die der Segmentanker seitlich einschiebbar und durch eine untere und eine obere Schraubenmutter sowie eine Unterlagsscheibe fest mit dem dazwischenliegenden horizontalen Schenkel verbindbar ist. Ferner weist der horizontale Schenkel beidseits der Schlitzöffnung auf seiner nach oben gerichteten Seite je ein Halteelement auf, mittels denen die Unterlagsscheibe seitlich gehalten wird, so dass sich der mit dem Segmentanker verbundene L-förmige Bügel nicht mehr selbsttätig vom Segmentanker lösen kann.

Aus der US2006138286A1 ist eine Haltevorrichtung für eine Rohrschelle bekannt, die ein U-förmiges Aufnahmeteil aufweist, in das ein Rohr einlegbar ist und das mittels eines Bolzens mit einem U-förmigen Halteteil verbindbar ist. Das Halteteil ist mit einer horizontal nach aussen geöffneten Schlitzöffnung versehen, die der Aufnahme einer Gewindestange dient, an der die Vorrichtung befestigt werden kann.

Die GB2268338A offenbart einen Kabelträger mit einem Kanal mit konstantem Querschnitt, der eine offene Fläche aufweist und mit in Längsrichtung verlaufenden, paarweise vorgesehenen inneren Nuten versehen ist, wobei jedes Paar angepasst ist, um als Gleitsitz ein Plattenelement, das sich in Längsrichtung des Kabelträgers erstreckt, und mindestens ein Paar Nuten aufzunehmen, die in einer Ebene rechtwinklig zur Ebene von mindestens einem anderen Paar Nuten liegen.

Die DE9204000U1 offenbart eine Kabelrinne mit nach innen umgebogenen Schenkelrändern sowie in Rinnenlängsrichtung voneinander beabstandeten Haltern, die je eine mit einer schlüssellochartigen Lochung versehene Basis als Aufnahme und Halterung für ein Befestigungsmittel aufweisen.

Der vorliegenden Erfindung liegt daher die Aufgabe zugrunde, eine nicht mit den beschriebenen Nachteilen behaftete Deckenstütze zu schaffen.

Insbesondere ist eine Deckenstütze zu schaffen, die unabhängig von einem gegebenenfalls hohen Gewicht und gegebenenfalls grösseren Abmessungen, ohne Sicherheitsrisiken einfach und rasch montierbar ist. so dass die Montage von Kabelführungsvorrichtungen rasch und sicher erfolgen kann.

Ferner ist eine einfach ausgestaltete und kostengünstig herstellbare Deckenstütze zu schaffen, die es erlaubt, Kabelführungsvorrichtung rasch und sicher zu installieren.

Diese Aufgaben werden mit einer Deckenstütze gelöst, welche die in Anspruch 1 angegebenen Merkmale aufweist. Vorteilhafte Ausgestaltungen der Erfindung sind in weiteren Ansprüchen angegeben.

Die Deckenstütze, die insbesondere der Montage einer Kabelführungsvorrichtung dient, weist ein Endstück und einen daran anschliessenden Stützenkörper auf, der mit einem Ausleger verbindbar ist, auf den die zu tragende Last abgelegt werden kann. Das Endstück ist mit wenigstens einem mit einer Gewindestange versehenen Metalldübel, insbesondere einem Segmentanker, verbindbar, der in der Decke verankerbar ist.

Erfindungsgemäss weist das Endstück der Deckenstütze eine Aufnahmeöffnung auf, in die ein an der Gewindestange drehbar gelagertes Verbindungselement einführbar und seitlich zumindest teilweise unter das Endstück verschiebbar ist, wonach die Deckenstütze formschlüssig mit dem Metalldübel verbunden ist.

Die Deckenstütze kann daher in einem ersten Arbeitsschritt gegen den in der Decke verankerten Dübel oder Segmentanker angehoben und in einfacher Weise formschlüssig mit diesem verbunden werden. Nachdem die Deckenstütze formschlüssig mit dem Dübel oder Segmentanker verbunden wurde, kann das Endstück der Deckenstütze in einem zweiten Arbeitsschritt mittels einer Schraubenmutter, gegebenenfalls mittels des Verbindungselements, gegen die Decke geschraubt und unverrückbar fixiert werden.

Besonders wesentlich bei der erfindungsgemässen Lösung ist, dass der Montagevorgang in zwei Arbeitsschritte unterteilt wird, die vom Handwerker unabhängig voneinander vollzogen werden können. Der Handwerker kann eine erfindungsgemässe Deckenstütze im ersten Arbeitsschritt mit dem in der Decke vorhandenen Segmentanker formschlüssig und damit absolut absturzsicher verbinden, ohne dass Werkzeug oder Befestigungsmittel benötigt werden. Im zweiten Arbeitsschritte kann die Deckenstütze, ohne dass diese selbst gehalten werden muss, durch Festdrehen des Verbindungselements, gegebenenfalls der Schraubenmutter, fixiert werden.

Vorzugsweise weist die im Endstück vorgesehene Aufnahmeöffnung ein grösseres erstes und ein kleineres zweites Öffnungsteil auf. Das grössere erste Öffnungsteil ist derart dimensioniert, dass die Gewindestange und das damit verbundene Verbindungselement hindurch führbar sind. Das vorzugsweise im Endstück zentral angeordnete kleinere zweite Öffnungsteil ist derart dimensioniert, dass die Gewindestange vorzugsweise spielfrei seitlich einschiebbar ist. Der an das zweite Öffnungsteil angrenzende Rand, der Teil des Endstücks ist, dient dabei als Flansch zum Halten des Verbindungselements.

Das in die Montageposition verschobene Verbindungselement, gegebenenfalls die Schraubenmutter, können in dieser Position auf verschiedene Arten fixiert und/oder gesichert werden. Vorzugsweise wird das Endstück mit einem Sitz versehen, in den das Verbindungselement eingesenkt werden kann. Zusätzlich oder alternativ können Hindernisse vorgesehen sein, welche das Verbindungselement zurück halten. Beispielsweise kann zwischen dem ersten und zweiten Öffnungsteil ein Teil des Endstücks umgebogen werden, um wenigstens einen Haken oder eine Nase zu bilden, welche verhindert, dass die Gewindestange aus dem kleineren Öffnungsteil in das grössere Öffnungsteil verschiebbar ist, ohne dass die Deckenstütze angehoben wird.

Ferner kann bei der Bearbeitung des Endstücks, beispielsweise bei Einbringen der Aufnahmeöffnung ein Sitz eingeprägt oder eingesetzt werden, der einen oder mehrere Millimeter tief ist und vorzugsweise entsprechend der Form des Verbindungselements gewählt ist. Unter Einwirkung des Eigengewichts bleibt die Deckenstütze nach Vollzug des ersten Arbeitsschritts somit sicher gehalten und kann im zweiten Arbeitsschritt mit einfachen Handgriffen fixiert werden.

Vorzugsweise ist das grosse Öffnungsteil der beispielsweise Schlüsselloch-förmigen Aufnahmeöffnung in der Mitte des Endstücks angeordnet, so dass das Verbindungsteil bzw. die Schraubenmutter besonders einfach eingeführt werden kann. Nach dem seitlichen Verschieben der Deckenstütze wird dessen Endstück daher exzentrisch gehalten, weshalb sich dieses gegen die Decke neigen und daran anstossen kann, so das ein selbsttätiges Drehen der Deckenstütze vermieden wird.

Nachfolgend wird die Erfindung, einschliesslich weiterer vorzugsweiser Ausgestaltungen, anhand von Zeichnungen beispielsweise näher erläutert. Dabei zeigt:

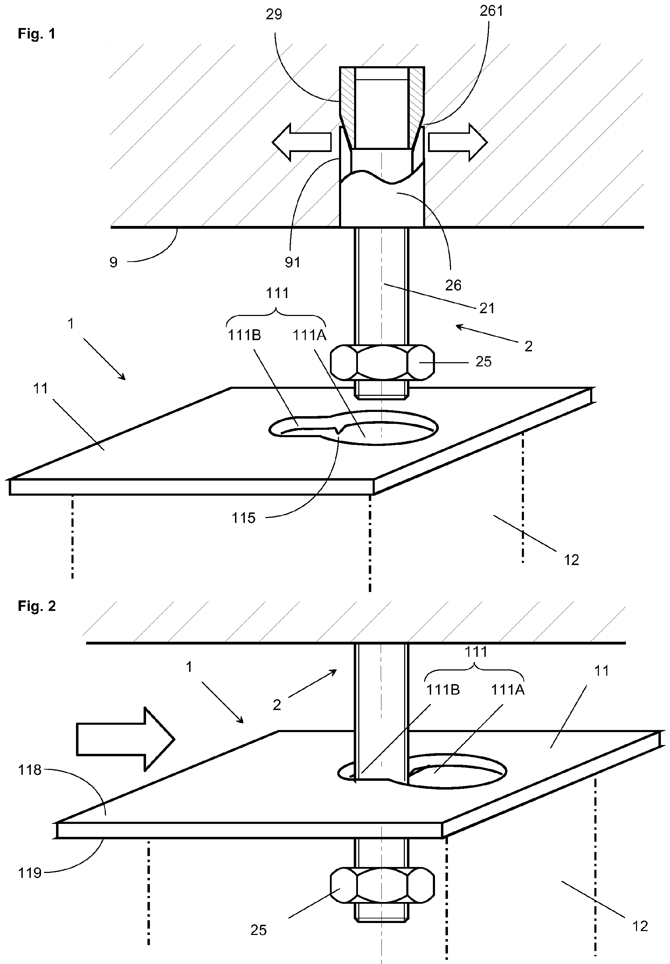

- Fig. 1: eine erfindungsgemässe Deckenstütze 1 mit einem in einer Decke 9 befestigten Segmentanker 2, der eine Gewindestange 21 aufweist, an der ein Verbindungselement 25 bzw. eine Schraubenmutter drehbar gelagert ist, das in eine Aufnahmeöffnung 111 im Endstück 11 der Deckenstütze 1 einführbar ist, die ein grösseres erstes Öffnungsteil 111A und ein daran anschliessendes kleineres zweites Öffnungsteil 111B aufweist;
- Fig. 2: die Deckenstütze 1 von Figur 1, nachdem die von der Gewindestange 21 gehaltene Schraubenmutter 25 durch das grössere erste Öffnungsteil 111A hindurch geführt und die Gewindestange 21 seitlich in das kleinere zweite Öffnungsteil 111B eingeführt wurde;

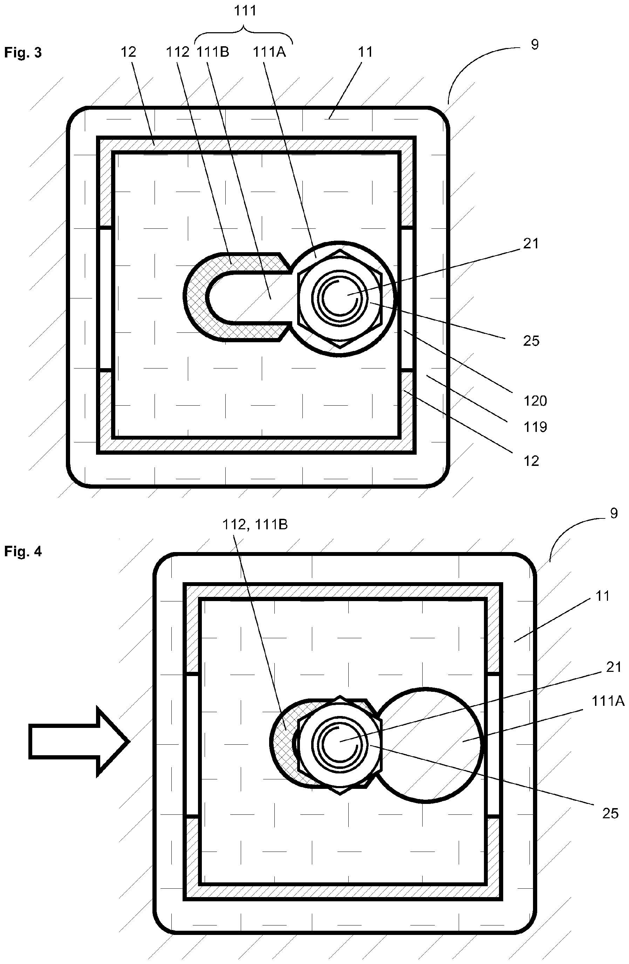

- Fig. 3: eine vorzugsweise ausgestaltete Deckenstütze 1 in einer zu Figur 1 korrespondierenden Montageposition, bei der die mit der Schraubenmutter 25 versehene Gewindestange 21 des Segmentankers 2 in das grössere erste Öffnungsteil 111A der Aufnahmeöffnung 111 eingeführt wird; und
- Fig. 4: die Deckenstütze 1 von Figur 3 in der zu Figur 2 korrespondierenden Montageposition, bei der die mit der Schraubenmutter 25 versehene Gewindestange 21 des Segmentankers 2 aus dem grösseren ersten Öffnungsteil 111A in das kleinere zweite Öffnungsteil 111B der Aufnahmeöffnung 111 überführt und in den dort vorgesehenen Sitz 112 eingesenkt wird.

Figur 1 zeigt eine erfindungsgemässe Deckenstütze 1 mit einem Körper 12, der oben mit einem plattenförmigen Endstück 11 versehen ist. Weiter zeigt Figur 1 einen Dübel oder Segmentanker 2, der in einer Bohrung 91 in einer Decke 9 befestigtet ist. Segmentanker dieser Art sind beispielsweise aus [2], DE 197 56 997 A1 bekannt. Der gezeigte Segmentanker 2 weist ein von einer Gewindestange 21 gehaltenes Kopfstück 29 auf, das gegen das Endstück 261 einer Hülse 26 gezogen wird und dieses radial nach aussen drückt, wodurch der Segmentanker 2 in der Bohrung 91 verankert wird. Auf der Unterseite ist die Gewindestange 21 mit einem Verbindungselement 25 versehen, welches in dieser Ausgestaltung in Form einer Schraubenmutter vorliegt.

Im Endstück 11 der Deckenstütze ist eine Aufnahmeöffnung 111 vorgesehenen, die der Aufnahme der mit der Schraubenmutter 25 versehenen Gewindestange 21 dient. Die Aufnahmeöffnung weist ein grösseres erstes und ein kleineres zweites Öffnungsteil 111A bzw. 111B auf. Das grössere erste Öffnungsteil 111A ist derart dimensioniert, dass die Gewindestange 21 und das Verbindungselement bzw. die Schraubenmutter 25 hindurch führbar sind. Das vorzugsweise im Endstück 11 zentral angeordnete kleinere zweite Öffnungsteil 111B ist derart dimensioniert, dass die Gewindestange 12 vorzugsweise mit geringem Spiel einführbar ist, wenn die Deckenstütze 1 seitlich entsprechend verschoben wird. Das zweite Öffnungsteil 111B und das Verbindungselement 25 sind ferner derart ausgeführt, dass der Querschnitt des Verbindungselements 25 wesentlich grösser ist als das zweite Öffnungsteil 111B.

Der an das zweite Öffnungsteil 111B angrenzende Rand 112, der Teil des Endstücks 11 ist, dient daher als Flansch, der die Schraubenmutter 25 hält, sobald diese an der Unterseite 119 des Endstücks 11 unter das zweite Öffnungsteil 111B geschoben wird. Die in Figur 2 gezeigte Deckenstütze 1 kann daher auf die Schraubenmutter 25 abgesenkt werden und wird von dieser gehalten.

Damit das Verbindungselement bzw. die Schraubenmutter 25 unterhalb des kleineren zweiten Öffnungsteils 111B gehalten bleibt und sich nicht in zum grösseren ersten Öffnungsteil 111A zurück verschieben kann, können verschiedene Massnahmen vorgesehen werden.

Wie in Figur 1 gezeigt, kann im Bereich des Übergangs zwischen dem ersten und dem zweiten Öffnungsteil 111A, 111B ein Hindernis, beispielsweise ein hervor stehendes Randelement 115, beispielsweise ein Widerhaken vorgesehen sein, welches als Anschlag für die Schraubenmutter 25 dient. Dadurch bleibt gewährleistet, dass sich die Deckenstütze 1 nicht selbsttätig von der Gewindestange 21 lösen kann.

Figur 3 zeigt eine erfindungsgemässe Deckenstütze 1 in einer besonders vorteilhaften Ausgestaltung. Gezeigt ist ein Schnitt durch den Körper 12 der Deckenstütze 1 mit Darstellung der Unterseite 119 des Endstücks 11 und des mit der Schraubenmutter 25 versehenen Gewindestange 21 von unten gesehen.

In der zu Figur 1 korrespondierenden Darstellung von Figur 3 wird die mit der Schraubenmutter 25 versehene Gewindestange 21 durch das grössere erste Öffnungsteil 111A hindurch geführt.

In der zu Figur 2 korrespondierenden Darstellung von Figur 4 wurde die Deckenstütze 1 in entsprechender Richtung seitlich gegen die Gewindestange 21 verschoben, so dass der Rand des kleineren zweiten Öffnungsteils 111B die Gewindestange 21 fast spielfrei umschliesst und die Gewindestange 21 nur hin zum grösseren ersten Öffnungsteil 111A wieder entweichen kann.

Um dies zu verhindern, weist das Endstück 11 der in den Figuren 3 und 4 gezeigten Deckenstütze 1 einen vorzugsweise konzentrisch zum zweiten Öffnungsteil 111B angeordneten Sitz 112 für die Schraubenmutter auf, der in das Endstück 11 eingesenkt ist. Nachdem die Gewindestange 21 in das kleinere zweite Öffnungsteil 111B eingeführt wurde, kann die Deckenstütze 1 nach unten geführt werden, bis die Schraubenmutter 25 in den Sitz 112 eindringt und dort vorzugsweise zumindest teilweise formschlüssig gehalten wird. In diesem Zustand ist die Deckenstütze provisorisch gesichert. Es wird verhindert, dass sich die von der Gewindestange 21 gehaltene Schraubenmutter 25 aus dem zweiten Öffnungsteil 111B lösen kann. Sofern die Schraubenmutter 25 innerhalb des Sitzes 112 zumindest teilweise formschlüssig gehalten ist, wird auch verhindert, dass sich diese, beispielsweise aufgrund von Vibrationen, ungewollt drehen und von der Gewindestange 21 lösen kann.

Vorzugsweise ist der Sitz 112 als kragenförmiger Rand ausgebildet, der in das Endstück 11 derart eingeprägt oder eingefräst ist, dass er die Schraubenmutter 25 nahe umschließt und die soweit hält, dass diese nur mittels eines Werkzeugs gedreht werden kann.

Die erfindungsgemässe Deckenstütze 1 kann mit einem oder mehreren Dübeln oder Segmentankern 2 verbunden werden. Sofern mehrere Dübel oder Segmentanker 2 verwendet werden, können mehre Aufnahmeöffnungen 111 im Endstück 11 vorgesehen werden, in die in der oben beschriebenen Weise je ein Verbindungselement 25 eingeführt wird. Möglich ist ferner die Anordnung nur einer verlängerten Aufnahmeöffnung, in die zwei oder mehrere Verbindungselemente 25 in der oben beschriebenen Weise einführbar und in eine zugehörige Montageposition verschiebbar sind.

## Patentansprüche

1. Deckenstütze (1) insbesondere zur Montage einer Kabelführungsvorrichtung (6), mit einem Endstück (11) und einem daran anschliessenden Stützenkörper (12), der mit einem Ausleger verbindbar ist, auf den die Kabelführungsvorrichtung (6) abgelegt werden kann, und mit wenigstens einem mit einer Gewindestange (21) versehenen Segmentanker (2), der einerseits mit dem Endstück (11) verbindbar und andererseits in der Decke (9) verankerbar ist, **dadurch gekennzeichnet, dass** das Endstück (11) eine in sich geschlossene Aufnahmeöffnung (111) aufweist, durch die ein an der Gewindestange (21) drehbar gelagertes Verbindungselement (25) hindurch führbar und seitlich zumindest teilweise unter die Unterseite (119) des Endstücks (11) verschiebbar und festschraubbar ist, wonach die Deckenstütze (1) formschlüssig mit dem Segmentanker (2) verbunden ist, wobei die Aufnahmeöffnung (111) ein kleineres zweites Öffnungsteil (111B) und ein grösseres erstes Öffnungsteil (111A) aufweist, das derart dimensioniert ist, dass die Gewindestange (21) und das damit verbundene Verbindungselement (25) dadurch hindurch führbar sind, und dass das kleinere zweite Öffnungsteil (111B) derart dimensioniert ist, dass die Gewindestange (21) seitlich darin einschiebbar ist, und dass der an das zweite Öffnungsteil (111B) angrenzende Rand, der Teil des Endstücks (11) ist, als Flansch zum Halten des Verbindungselements (25) dient, und wobei das Endstück (11) an dessen Unterseite (119) einen eingesenkten Sitz (112) und/oder wenigstens einen Widerhaken (115) aufweist, mittels dessen das Verbindungselement (25) unter dem zweiten Öffnungsteil (111B) gehalten ist, nachdem die Gewindestange (21) in dieses eingeführt wurde.

2. Deckenstütze (1) nach Anspruch 1, **dadurch gekennzeichnet, dass** die Aufnahmeöffnung (111) des Endstücks (11) ein grösseres erstes Öffnungsteil (111A), welches der Durchführung Gewindestange (21) und des damit verbundenen Verbindungselements (25) dient, und ein kleineres zweites Öffnungsteil (111B) aufweist, welches der Aufnahme der Gewindestange (21) dient und dessen Rand (112) als Flansch für das Verbindungselement (25) dient.

3. Deckenstütze (1) nach Anspruch 2, **dadurch gekennzeichnet, dass** die Abmessungen des zweiten Öffnungsteils (111B) entsprechend dem Durchmesser der Gewindestange (21) gewählt sind, so dass dieses nach der Montage im zweiten Öffnungsteil (111B) vorzugsweise spielfrei gehalten ist.

4. Deckenstütze (1) nach Anspruch 1, 2 oder 3, **dadurch gekennzeichnet, dass** der Sitz (112) die Form einer kragenförmigen Vertiefung aufweist, die vorzugsweise derart in das Endstück (11) eingepresst oder eingefräst ist, dass eine kontinuierliche oder sprunghafte Höhenänderung im Bereich des Übergangs zwischen dem grösseren ersten Öffnungsteil (111A) und dem kleineren zweiten Öffnungsteil (111B) resultiert.

5. Deckenstütze (1) nach einem der Ansprüche 1 - 4, **dadurch gekennzeichnet, dass** das erste oder das zweite Öffnungsteil (111A, 111B) in der Mitte des Endstücks (11) angeordnet ist.

6. Deckenstütze (1) nach einem der Ansprüche 1 - 5, **dadurch gekennzeichnet, dass** das Verbindungselement (25) eine Schraubenmutter ist oder dass das Verbindungselement (25) aus einer Schraubenmutter und einer Unterlagsscheibe besteht.

7. Deckenstütze (1) nach einem der Ansprüche 1 - 6, **dadurch gekennzeichnet, dass** die Aufnahmeöffnung (111) zumindest annähernd die Form eines Schlüssellochs aufweist.

8. Deckenstütze (1) nach einem der Ansprüche 1 - 7, **dadurch gekennzeichnet, dass** das Endstück (11) eine vorzugsweise veredelte Metallplatte ist.

## Claims

1. Ceiling strut (1) particularly for mounting a cable guiding device (6), with an end piece (11) and a strut body (12) adjoining thereto, which is connectable to a cantilever, on which the cable guiding device (6) can be placed, and with a segment anchor (2) that is provided with a threaded rod (21) and that on the one hand is connectable with the end piece (11) and on the other hand can be anchored in the ceiling (9), **characterized in that** the end piece (11) has a receiving opening (111) which is closed in itself, through which a connecting element (25), which is mounted rotatably on the threaded rod (21), is guidable through and is laterally displaceable at least partially below that lower side (119) of the end piece (11) and is tightly screwable, whereafter the ceiling strut (1) is positively connected to the segment anchor (2), wherein the receiving opening (111) comprises a smaller second opening part (111B) and a larger first opening part (111A), which is dimensioned such that the threaded rod (21) and the connecting element (25) connected thereto are guidable through it, and that the smaller second opening part (111B) is dimensioned such that the threaded rod (21) is laterally insertable therein and that the edge adjacent to the second opening part (111B), which is part of the end piece (11), serves as a flange for holding the connecting element (25), and wherein the end piece (11) has a recessed seat (112) and/or at least one barb (115) at its lower side (119) with which the connecting element (25) is held below the second opening part (111B), after the threaded rod (21) has been inserted therein.

2. Ceiling strut (1) according to claim 1, **characterized in that** the receiving opening (111) of the end piece (11) has a larger first opening part (111A), which serves for passing through the threaded rod (21) and the connecting element (25) connected thereto, and a smaller second opening part (111B), which serves for receiving the threaded rod (21) and whose edge (112) serves as a flange for the connecting element (25).

3. Ceiling strut (1) according to claim 2, **characterized in that** the dimensions of the second opening part (111B) are selected in accordance with the diameter of the threaded rod (21), so that after assembly it is held preferably free from play in the second opening part (111B).

4. Ceiling strut (1) according to claim 1, 2 or 3, **characterized in that** the seat (112) exhibits the form of a collar-shaped recess, which is preferably pressed or milled into the end piece (11) such, that a continuous or abrupt change in height results in the region of the transition between the larger first opening part (111A) and the smaller second opening part (111B).

5. Ceiling strut (1) according to one of the claims 1 - 4, **characterized in that** the first or the second opening part (111A, 111B) is arranged in the middle of the end piece (11).

6. Ceiling strut (1) according to one of the claims 1 - 5, **characterized in that** the connecting element (25) is a screw nut or that the connecting element (25) consists of a screw nut and a washer.

7. Ceiling strut (1) according to one of the claims 1 - 6, **characterized in that** the receiving opening (111) has at least approximately the shape of a keyhole.

8. Ceiling strut (1) according to one of the claims 1 - 7, **characterized in that** the end piece (11) is a preferably refined metal plate.

## Revendications

1. Etai de plafond (1), en particulier pour le montage d'un dispositif de guidage de câble (6), avec une pièce d'extrémité (11) et un corps d'étai (12) contigu à celle-ci, qui peut être relié à un cantilever sur lequel le dispositif de guidage de câble (6) peut être placé, et comprenant au moins un ancrage de segment (2) qui est muni d'une tige filetée (21), qui peut être relié d'une part à la pièce d'extrémité (11) et d'autre part peut être ancré dans le plafond (9), **caractérisé en ce que** la pièce d'extrémité (11) présente une ouverture de réception (111) qui est fermée en elle-même, et à travers laquelle un élément de liaison (25) monté rotatif sur la tige filetée (21) peut être guidé et déplacé latéralement au moins partiellement en dessous de la face inférieur (119) de la pièce d'extrémité (11) et peut être vissé fermement, après quoi l'étai de plafond (1) est reliée positivement à l'ancrage de segment (2), l'ouverture de réception (111) présentant une deuxième partie d'ouverture plus petite (111B) et une première partie d'ouverture (111A) plus grande, qui est dimensionnée de telle sorte que la tige filetée (21) et l'élément de liaison (25) relié à celle-ci peuvent la traverser, et que la deuxième partie d'ouverture (111B) plus petite est dimensionnée de telle sorte que la tige filetée (21) peut y être insérée latéralement et que le bord adjacent à la deuxième partie d'ouverture (111B), qui fait partie de l'étai de plafond (1), sert de bride pour maintenir l'élément de liaison (25), et que la pièce d'extrémité (11) présentant sur sa face inférieur (119) un siège encastré (112) et/ou au moins une barbillon (115), au moyen duquel l'élément de liaison (25) est maintenu sous la deuxième partie d'ouverture (111B), après que la tige filetée (21) y a été introduite.

2. Etai de plafond (1) selon la revendication 1, **caractérisé en ce que** l'ouverture de réception (111) de la pièce d'extrémité (11) présente une première partie d'ouverture (111A) plus grande, qui sert à passer à travers de la tige filetée (21) et l'élément de liaison (25) qui y est relié, et une seconde partie d'ouverture (111B) plus petite qui sert à recevoir la tige filetée (21) et dont le bord (112) sert de bride à l'élément de liaison (25).

3. Etai de plafond (1) selon la revendication 2, **caractérisé en ce que** les dimensions de la deuxième partie d'ouverture (111B) sont choisies en fonction du diamètre de la tige filetée (21), de sorte qu'après montage dans la deuxième partie d'ouverture (111B), celle-ci est de préférence maintenue sans jeu.

4. Etai de plafond (1) selon la revendication 1, 2 ou 3, **caractérisé en ce que** le siège (112) a la forme d'une dépression en forme de collier qui est de préférence pressée ou fraisée dans la pièce d'extrémité (11), de telle sorte qu'une variation continue ou brusque de hauteur résulte dans la zone de transition entre la partie d'ouverture (111A) plus grande et la seconde partie d'ouverture (111B) plus petite.

5. Etai de plafond (1) selon une des revendications 1 - 4, **caractérisé en ce que** la première ou la deuxième partie d'ouverture (111A, 111B) est disposée au milieu de la pièce d'extrémité (11).

6. Etai de plafond (1) selon une des revendications 1 - 5, **caractérisé en ce que** l'élément de liaison (25) est un écrou à vis ou **en ce que** l'élément de liaison (25) est constitué d'un écrou à vis et d'une rondelle.

7. Etai de plafond (1) selon une des revendications 1 - 6, **caractérisé en ce que** l'ouverture de réception (111) a au moins approximativement la forme d'un trou de serrure.

8. Etai de plafond (1) selon une des revendications 1 - 7, **caractérisé en ce que** la pièce d'extrémité (11) est de préférence une plaque métallique affinée.
